# FASCICULE DE BREVET EUROPEEN

(11) **EP 3 274 395 B1**
(45) Date de publication et mention de la délivrance du brevet: **29.01.2020**
(21) Numéro de dépôt: 16718388.8
(22) Date de dépôt: 22.03.2016
(51) Int. Cl.: C08G 77/06, C09D 183/04, C04B 41/49, C08J 3/03

(54) **PROCEDE DE PREPARATION D'UNE RESINE SILICONE STABLE AU STOCKAGE**
VERFAHREN ZUR HERSTELLUNG EINES LAGERSTABILEN SILIKONHARZES
PROCESS FOR PREPARING A STORAGE-STABLE SILICONE RESIN

(30) Priorité: 24.03.2015 FR 1500576
(43) Date de publication de la demande: 31.01.2018
(73) Titulaire: ELKEM SILICONES France SAS, 69003 Lyon (FR)
(72) Inventeur: ROCA-ORTEGA, José-Luis, 38200 Vienne (ES); BOUSQUIE, Magali, 69003 Lyon (FR); PARISOT, Hervé, 69300 Caluire et Cuire (FR); DUPIN, Fabien, 69380 Alix (FR)
(74) Mandataire: Mekki, Boualem
(86) Numéro de dépôt international: PCT/FR2016/000054
(87) Numéro de publication internationale: WO 2016/151205

(56) Documents cités:
- WO-A1-97/47569
- FR-A1- 2 881 748
- GB-A- 1 220 381
- US-A1- 2006 264 567
- US-A1- 2012 168 780
- US-A1- 2014 088 232
- US-A1- 2015 000 562

## Description

La présente invention se situe dans le domaine des procédés de préparation de composés silicones et plus particulièrement de résines silicone.

Les résines silicone sont largement utilisées dans des produits commerciaux. En particulier, les résines silicones MDT à groupement hydroxyles sont utilisées pour l'hydrofugation des constructions et matériaux de construction poreux du type pierre, béton, mortier, briques, tuiles, bois, etc. Ces matériaux poreux sont sensibles à l'humidité.

Les résines silicones peuvent être préparées par hydrolyse directe ou inverse de chlorosilanes, par des procédés pouvant être continus ou discontinus.

Par hydrolyse directe, on entend ici une hydrolyse effectuée par ajout d'un mélange de chlorosilanes dans un milieu aqueux.

Par hydrolyse inverse, on entend ici une hydrolyse effectuée par ajout d'une phase aqueuse dans un mélange de chlorosilanes.

Par procédé discontinu ou batch, on entend ici un procédé pour lequel les différentes étapes s'enchaînent dans le temps.

Par mélange stable, on entend ici un mélange dont la viscosité cinématique mesurée selon la norme ASTM D445-94 n'augmente pas au stockage de plus de 10% relatif durant une période d'au moins 6 mois, de préférence durant une période d'au moins 12 mois et de manière encore plus préférentielle durant une période d'au moins 18 mois.

Comme art antérieur, nous pouvons citer le brevet accordé EP-907622-B1. Ainsi le dit-brevet décrit une émulsion aqueuse de résine silicone pour l'hydrofugation de matériaux de construction. Un procédé de préparation de résine silicone discontinu par hydrolyse inverse en milieu isopropyléther est décrit dans ce dit-document. Il présente néanmoins de nombreux inconvénients à savoir un dégagement continu d'acide chlorhydrique gazeux avec la nécessité d'utiliser un dispositif permettant d'adsorber l'acide chlorhydrique gazeux ce qui a un impact économique et par ailleurs, une fuite intempestive d'acide chlorhydrique gazeux peut entrainer des risques graves pour la santé et la sécurité des opérateurs. De plus, l'isopropyléther de par sa solubilité dans l'eau de l'ordre de 45% à 20°C en présence de 40% d'acide chlorhydrique nécessite de traiter l'eau avant un éventuel recyclage ce qui impacte à nouveau les coûts. Il faut de plus mettre en œuvre un isopropyléther exempt d'oléfines car celles-ci peuvent réagir avec l'acide chlorhydrique pour former des chloroalcanes qui peuvent conduire à une condensation intempestive des motifs silanols et donc à une gélification de la résine silicone. Il faut donc mettre en œuvre un isopropyléther purifié ce qui impacte à nouveau les coûts.

De plus cette résine silicone de par la présence de chlore hydrolysable résiduel évolue au stockage. Sa viscosité augmente fortement et rapidement.

Pour toutes ces raisons, les procédés de préparation de résine silicone doivent être sans cesse améliorés.

La présente invention a pour objet une méthode de préparation par hydrolyse directe d'un mélange stable au stockage à base de résine silicone composée de groupements monofonctionnels (motif M), de motifs difonctionnels (motif D) et de motifs trifonctionnels (motif T). Les résines silicones présentent un taux de fonctions hydroxyles appelées aussi oxhydryles ou hydroxys et une distribution en poids moléculaire contrôlée. Ces fonctions hydroxyles peuvent être portées indifféremment par les motifs D ou T de la résine silicone.

Il s'agit d'une part d'éviter la mise en oeuvre d'un procédé d'hydrolyse inverse et donc un dégagement en continu d'acide chlorhydrique gazeux et d'autre part d'éviter l'utilisation d'isopropyléther préjudiciable de par sa solubilité à un recyclage aisé de l'eau après hydrolyse.

Il s'agit de mettre en œuvre un procédé simple et peu couteux car ne nécessitant pas l'ajout d'additif tel qu'un alcool, une cétone, des alcoxysilanes, ou un tensioactif lors de l'étape d'hydrolyse.

Il s'agit d'éviter une gélification lors des étapes d'hydrolyse, d'avancement et de condensation post-hydrolyse.

Il s'agit aussi d'éviter toute évolution des caractéristiques chimiques et physiques du mélange à base de résine silicone MDT à fonctions hydroxyles tout en conservant de bonnes propriétés hydrofugeantes après formulation du mélange stable à base de résine silicone et mise en œuvre dans un revêtement hydrofugeant.

Par revêtement hydrofugeant, on entend notamment les peintures extérieures et intérieures telles que peintures à l'eau, crépis, lazures, imprégnations, revêtements semi-épais (RSE) ou peintures pour façades.

Ainsi, un objectif essentiel de la présente invention est de fournir un procédé de préparation de mélanges stables à base de résine silicone qui soit simple de mise en œuvre, ne nécessitant pas d'investissements industriels additionnels importants ni des dépenses énergétiques élevées par rapport aux procédés connus et qui permette l'obtention de mélanges stables à base de résine silicone utilisables dans les revêtements hydrofugeants des matériaux de construction.

De façon plus spécifique, l'invention a également pour but de fournir des mélanges stables à base de résines silicones utilisables dans les revêtements hydrofugeants des matériaux de construction et à qui ils peuvent conférer de bonnes propriétés hydrofugeantes.

Un autre objectif de l'invention est de fournir une composition aqueuse de silicone comprenant ce mélange stable à base de résine silicone.

Un autre objectif de la présente invention est d'obtenir une peinture comprenant une composition aqueuse de silicone comprenant elle-même ce mélange stable à base de résine silicone.

Un autre objectif de la présente invention est d'obtenir un hydrofugeant pour matériaux de construction poreux.

Tous ces objectifs, parmi d'autres, sont atteints par la présente invention qui concerne un procédé de préparation d'un mélange **X** stable au stockage comprenant :
i. une résine silicone **R** constituée des motifs siloxyles M, D et T avec :
   - M étant un motif siloxyle de formule : (Z¹)₃SiO_{1/2},
   - D étant un motif siloxyle de formule : (Z²)₂SiO_{2/2}, et
   - T étant un motif siloxyle de formule : Z³SiO_{3/2}
      formules dans lesquelles les symboles Z¹, Z² et Z³, identiques ou différents, représentent chacun :
      - un radical alkyle linéaire ou ramifié contenant de 1 à 8 atomes de carbone, et de préférence le radical alkyle est choisi parmi le groupe constitué par un méthyle, un éthyle, un propyle, ou un octyle, et encore plus préférentiellement le radical est un méthyle,
      - un radical cycloalkyle contenant de 5 à 8 atomes de carbone, éventuellement substitué par au moins un halogène,
      - un radical aryle contenant de 6 à 12 atomes de carbone éventuellement substitué par au moins un halogène, de préférence un phényle ou un dichlorophényle,
      - un radical ayant une partie alkyle contenant de 5 à 14 atomes de carbone et une partie aryle contenant de 6 à 12 atomes de carbone éventuellement substituée par au moins un halogène, un radical alkyle contenant de 1 à 6 atomes de carbones et/ou un radical alkoxyle contenant de 1 à 3 atomes de carbone,
      - un radical hydroxyle,
      - un atome d'hydrogène, ou
      - un radical alcényle contenant de 2 à 6 atomes de carbone; et avec la condition que pour au moins un motif D ou T au moins un symbole Z² ou Z³ est un radical hydroxyle, et
ii. au moins un composé organique **O** contenant au moins un groupe époxy **E,**
ledit procédé comprenant les étapes a) à g) suivantes :
a) un mélange **A** est préparé à partir de:
   ∘ 60 à 71% en poids d'un chlorosilane de formule R¹SiCl₃,
   ∘ 15 à 25% en poids, de préférence de 19 à 25% en poids d'un chlorosilane de formule (R²)₂SiCl₂,
   ∘ 7,5 à 20% en poids, de préférence de 7,5 à 16,5% en poids d'un chlorosilane de formule (R³)₃SiCl, et
   ∘ éventuellement un hydrocarbure aromatique **AH,**
      formules dans lesquelles les symboles R¹, R² et R³, identiques ou différents, représentent chacun:
      ▪ un radical alkyle linéaire ou ramifié contenant de 1 à 8 atomes de carbone, et de préférence le radical alkyle est choisi parmi le groupe constitué par un méthyle, un éthyle, un propyle, ou un octyle, et encore plus préférentiellement le radical est un méthyle,
      ▪ un radical cycloalkyle contenant de 5 à 8 atomes de carbone cycliques, éventuellement substitué par au moins un halogène,
      ▪ un radical aryle contenant de 6 à 12 atomes de carbone pouvant être éventuellement substitué par au moins un halogène, de préférence phényle ou dichlorophényle,
      ▪ un radical ayant une partie alkyle contenant de 5 à 14 atomes de carbone et une partie aryle contenant de 6 à 12 atomes de carbone éventuellement substituée par au moins un halogène, un alkyle contenant de 1 à 6 atomes de carbones et/ou un alkoxyle contenant de 1 à 3 atomes de carbone,
      ▪ un atome d'hydrogène, et
      ▪ un radical alcényle contenant de 2 à 6 atomes de carbone ;
b) le mélange **A** est ajouté sous agitation et en maintenant une température comprise entre 5 et 60°C, à un mélange biphasique **B** constitué d'une phase aqueuse et d'une phase solvant préparé à partir d'eau, d'un hydrocarbure aromatique **AH** et éventuellement d'une solution aqueuse d'acide chlorhydrique **CA,** de manière à effectuer une hydrolyse des chlorosilanes du mélange **A,**
c) éventuellement l'agitation est maintenue pendant au moins 1 heure, de préférence de 1 à 8 heures à une température comprise entre 30 et 60 °C permettant une réaction de condensation post-hydrolyse,
d) l'agitation est arrêtée de manière à séparer une phase aqueuse et une phase solvant,
e) la phase solvant est isolée et lavée à l'eau, et de préférence jusqu'à ce que le pH des eaux de lavage soit neutre,
f) la résine silicone **R** est isolée de la phase solvant de préférence par dévolatilisation, et
g) au moins un composé organique **O** contenant au moins un groupe époxy **E** est ajouté sous agitation à ladite résine silicone **R** obtenue à l'étape f) permettant d'obtenir ledit mélange **X.**

Dans ce contexte, le procédé selon l'invention présente les avantages suivants :
- pas de dégagement continu d'acide chlorhydrique gazeux donc pas de risques d'hygiène et de sécurité pour les opérateurs ni de risques environnementaux,
- pas de formation de gel,
- une simplification du procédé en supprimant par exemple l'ajout d'additifs lors de l'étape d'hydrolyse et le retraitement de l'eau préalablement à son recyclage, et
- pas d'évolution du mélange à base de résine silicone au stockage. On entend ici un mélange dont la viscosité cinématique n'augmente pas au stockage durant une période d'au moins 6 mois, de préférence durant une période d'au moins 12 mois et de manière encore plus préférentielle durant une période d'au moins 18 mois.

Dans la nomenclature silicone, par exemple pour les décrire, on parle de motifs M, D, T. La lettre M représente l'unité monofonctionelle de formule (CH₃)₃SiO_{1/2}, l'atome de silicium étant relié à un seul atome d'oxygène dans le polymère comprenant cette unité. La lettre D signifie une unité difonctionnelle (CH₃)₂SiO_{2/2} dans laquelle l'atome de silicium est relié à deux atomes d'oxygène. La lettre T représente une unité trifonctionnelle de formule (CH₃)SiO_{3/2}, dans laquelle l'atome de silicium est relié à trois atomes d'oxygène. Ces motifs peuvent être fonctionnalisés ce qui a pour conséquence le remplacement d'un ou plusieurs radical CH₃ par un autre radical tel que Z¹, Z² et Z³ mentionnés ci-dessus. On parle alors de motifs M, D, T tout en précisant les radicaux spécifiques.

De préférence, l'invention concerne un procédé de préparation d'un mélange **X** stable au stockage comprenant :
i. une résine silicone **R** constituée des motifs siloxyles M, D et T avec :
   - M étant un motif siloxyle de formule : (Z¹)₃SiO_{1/2},
   - D étant un motif siloxyle de formule : (Z²)₂SiO_{2/2}, et
   - T étant un motif siloxyle de formule : Z³SiO_{3/2}
      formules dans lesquelles les symboles Z¹, Z² et Z³, identiques ou différents, représentent chacun :
      - un radical alkyle linéaire ou ramifié contenant de 1 à 8 atomes de carbone, et de préférence le radical alkyle est choisi parmi le groupe constitué par un méthyle, un éthyle, un propyle, ou un octyle, et encore plus préférentiellement le radical est un méthyle,
      - un radical cycloalkyle contenant de 5 à 8 atomes de carbone, éventuellement substitué par au moins un halogène,
      - un radical aryle contenant de 6 à 12 atomes de carbone éventuellement substitué par au moins un halogène, de préférence un phényle ou un dichlorophényle,
      - un radical ayant une partie alkyle contenant de 5 à 14 atomes de carbone et une partie aryle contenant de 6 à 12 atomes de carbone éventuellement substituée par au moins un halogène, un radical alkyle contenant de 1 à 6 atomes de carbones et/ou un radical alkoxyle contenant de 1 à 3 atomes de carbone,
      - un radical hydroxyle,
      - un atome d'hydrogène, ou
      - un radical alcényle contenant de 2 à 6 atomes de carbone; et avec la condition que pour au moins un motif D ou T au moins un symbole Z² ou Z³ est un radical hydroxyle, et
ii. au moins un composé organique **O** contenant au moins un groupe époxy **E,**
ledit procédé comprenant les étapes a) à g) suivantes :
a) un mélange **A** est préparé à partir de:
   ∘ 60 à 71% en poids d'un chlorosilane de formule R¹SiCl₃,
   ∘ 15 à 25% en poids, de préférence de 19 à 25% en poids d'un chlorosilane de formule (R²)₂SiCl₂,
   ∘ 7,5 à 20% en poids, de préférence de 7,5 à 16,5% en poids d'un chlorosilane de formule (R³)₃SiCl, et
   ∘ éventuellement un hydrocarbure aromatique **AH,**
      formules dans lesquelles les symboles R¹, R² et R³, identiques ou différents, représentent chacun:
      ▪ un radical alkyle linéaire ou ramifié contenant de 1 à 8 atomes de carbone, et de préférence le radical alkyle est choisi parmi le groupe constitué par un méthyle, un éthyle, un propyle, ou un octyle, et encore plus préférentiellement le radical est un méthyle,
      ▪ un radical cycloalkyle contenant de 5 à 8 atomes de carbone cycliques, éventuellement substitué par au moins un halogène,
      ▪ un radical aryle contenant de 6 à 12 atomes de carbone pouvant être éventuellement substitué par au moins un halogène, de préférence phényle ou dichlorophényle,
      ▪ un radical ayant une partie alkyle contenant de 5 à 14 atomes de carbone et une partie aryle contenant de 6 à 12 atomes de carbone éventuellement substituée par au moins un halogène, un alkyle contenant de 1 à 6 atomes de carbones et/ou un alkoxyle contenant de 1 à 3 atomes de carbone,
      ▪ un atome d'hydrogène, et
      ▪ un radical alcényle contenant de 2 à 6 atomes de carbone ;
b) le mélange **A** est ajouté sous agitation et en maintenant une température comprise entre 5 et 60°C, à un mélange biphasique B constitué d'une phase aqueuse et d'une phase solvant préparé à partir d'eau, d'un hydrocarbure aromatique **AH** et éventuellement d'une solution aqueuse d'acide chlorhydrique **CA,** de manière à effectuer une hydrolyse des chlorosilanes du mélange **A,**
c) l'agitation est maintenue pendant au moins 1 heure, de préférence de 1 à 8 heures à une température comprise entre 30 et 60 °C permettant une réaction de condensation post-hydrolyse,
d) l'agitation est arrêtée de manière à séparer une phase aqueuse et une phase solvant,
e) la phase solvant est isolée et lavée à l'eau, et de préférence jusqu'à ce que le pH des eaux de lavage soit neutre,
f) la résine silicone **R** est isolée de la phase solvant de préférence par dévolatilisation, et
g) au moins un composé organique **O** contenant au moins un groupe époxy **E** est ajouté sous agitation à ladite résine silicone **R** obtenue à l'étape f) permettant d'obtenir ledit mélange **X.**

La somme des chlorosilanes de formules R¹SiCl₃, (R²)₂SiCl₂, et (R³)₃SiCl vaut 100%.

De préférence, les chlorosilanes utilisés sont le triméthylchlorosilane (Me₃SiCl), le diméthyldichlorosilane (Me₂SiCl₂) et le méthyltrichlorosilane (MeSiCl₃).

De préférence, à l'étape b) le mélange biphasique **B** est constitué d'eau, d'une solution aqueuse d'acide chlorhydrique **CA** et d'un hydrocarbure aromatique **AH,** et la concentration en acide chlorhydrique est inférieure à 25% en poids par rapport à la quantité d'eau totale du mélange biphasique **B.** La concentration en eau du mélange biphasique **B** est telle que le ratio massique eau totale sur eau nécessaire à l'hydrolyse complète des chlorosilanes soit supérieur à 6.

En fin de coulée des chlorosilanes de l'étape b), de l'hydrocarbure aromatique **AH** peut être éventuellement ajouté pour assurer un rinçage de l'installation qui permet l'introduction des dits chlorosilanes.

De préférence, à l'étape b), après que le mélange **A** soit ajouté à un mélange biphasique **B,** la concentration en hydrocarbure aromatique **AH** est comprise entre 40 et 70% en poids par rapport au poids total des chlorosilanes mis en œuvre et de l'hydrocarbure aromatique **AH,** de préférence entre 49 et 61% en poids par rapport au poids total de chlorosilanes mis en œuvre et de l'hydrocarbure aromatique **AH.**

De manière encore plus préférentielle l'hydrocarbure aromatique **AH** est choisi parmi le groupe constitué du toluène, xylène et leur mélange.

En termes d'hygiène et de sécurité des opérateurs, à l'issue de l'étape c) de maintien en température, de l'eau peut être éventuellement ajoutée pour diminuer l'acidité de la phase aqueuse.

A l'issue de l'étape c) de maintien en température, du solvant **AH** peut être éventuellement ajouté pour favoriser la séparation entre la phase solvant et la phase aqueuse.

A l'issue de l'étape c) de maintien en température, un additif peut éventuellement être ajouté pour faciliter la séparation de la phase aqueuse de la phase solvant. Comme exemple d'additif, on peut citer des sels, des solvants polaires tels que des alcools.

Par composé organique **O** renfermant au moins un groupe époxy **E,** on entend selon l'invention des substances chimiques comportant un oxygène ponté sur une liaison carbone-carbone adjacent ou non d'une chaîne ou d'un système cyclique, par suite éthers cycliques. Le terme époxyde désigne une sous-classe de composés époxy comportant un éther cyclique à 3 chaînons. On parle également d'oxacycloalcanes plus souvent abrégé en oxiranes. A titre de composé organique **O** renfermant au moins un groupe époxy **E,** on peut mentionner par exemple les époxydes d'esters d'acides gras, epoxidized esters of fatty acids ou epoxidized fatty acid esters pour les anglophones, composés ou mélange de composés de formule générale (**I**) suivante : 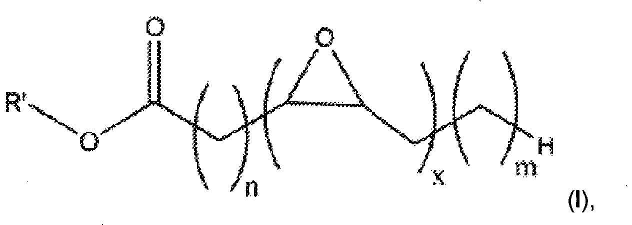 dans laquelle R' est un groupement alkyle linéaire ou ramifié comportant de 1 à 16 atomes de carbone, (n+x+m) est supérieur ou égal à 6, x est égal à 1, 2 ou 3, et (n+m) est supérieur ou égal à 3. Un procédé de préparation de ce composé ou mélange de composés est décrit dans la demande WO2009/138508.
On peut citer par exemple les époxydes d'oléate d'alkyles ou les époxydes de stéarates d'alkyles. On peut mentionner aussi les époxydes d'esters de glycérine d'acide gras, composés ou mélange de composés de formule générale (II) suivante : 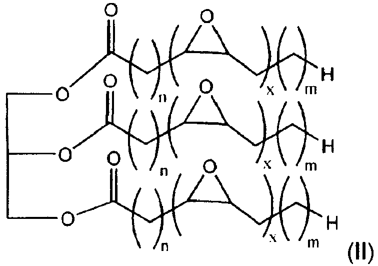 dans laquelle n, x et m sont tels que définis ci-dessus. On peut citer par exemple l'huile de soja époxydée, l'huile de ricin époxydée et l'huile de lin époxydée.
On peut aussi mentionner les époxydes de l'acide hexahydrophtalique, l'oxyde de glycidyle et de n-butyle (1-butoxy-2,3-époxypropane), l'oxyde de glycidyle et de tolyle (1,2-époxy-3-(tolyloxy)propane), l'oxyde de glycidyle et de phényle (1,2-époxy-3-phenoxypropane), l'oxyde de glycidyle et de 2-éthylcyclohexyle (1-(2 éthylcyclohexyl)-2,3-époxypropane), l'éther diglycidique du 1.4-butanediol (1,4-bis(2,3-époxypropoxy)butane), l'éther diglycidique du bisphénol A (2,2-bis(p-(2,3-époxypropoxy)phényle)propane) et l'éther diglycidique de néopentylglycol (1,3-bis(2,3-époxypropoxy)-2,2-diméthylpropane).

De préférence, le composé organique **O** contenant au moins un groupe époxy **E** est ajouté à l'étape g) de manière à ce que sa teneur soit comprise entre 0,1% et 1% par rapport au poids de ladite résine silicone **R** et de préférence entre 0,1% et 0,75% par rapport au poids de ladite résine silicone **R.**

De préférence, le composé organique **O** renfermant au moins un groupe époxy **E** ajouté à l'étape g) est un ester d'acides gras époxydés et de manière encore plus préférentielle le composé organique renfermant au moins un groupe époxy **E** ajouté à l'étape g) est le 2-éthylhexyl ester acides gras de soja époxydés.

Plus particulièrement, pour limiter la présence de composés de bas poids moléculaires pouvant impacter le taux de composés volatils et optimiser les propriétés hydrofugeantes du revêtement final, l'invention concerne un mélange **X,** susceptible d'être obtenu selon le procédé de l'invention et tel que décrit ci-dessus, stable au stockage constitué d'une résine silicone **R** à groupements hydroxyles et d'un composé organique renfermant au moins un groupe époxy **E** présentant une viscosité cinématique selon la norme ASTM D445-94 comprise entre 300 et 25000 mm2/s et un taux de fonctions hydroxyles mesuré par CPG / Catharométrie compris entre 0,2 et 4% en poids.

Le dosage des groupements hydroxyles est effectué par CPG/Catharométrie à partir du volume d'hydrogène dégagé après réduction desdits groupements avec de l'hydrure d'aluminium - lithium selon norme NFT 75-100.

La résine silicone **R** présente un taux de motifs M compris entre 7,5 et 18%, un taux de motifs D totaux compris entre 16 et 27% et un taux de motifs T totaux compris entre 60 et 70%, pourcentages molaires déterminés par RMN²⁹Si. Par motifs D totaux, on entend ici les motifs D et D^{OH}. Par motifs T totaux, on entend ici les motifs T et T^{OH}.

Un autre objet de l'invention concerne une dispersion silicone aqueuse Y caractérisée en ce qu'elle comprend:
- au moins un mélange **X** selon l'invention et tel que décrit ci-dessus,
- au moins un tensioactif **S,** et
- de l'eau **W.**

De préférence, cette dispersion aqueuse se présente sous la forme d'une émulsion huile dans eau.

Quand on met en œuvre l'agent tensioactif **S** dans la dispersion suivant l'invention, il s'agit, de préférence, d'un tensioactif non ionique.

Dans le cadre de la présente invention des agents tensioactifs anioniques peuvent éventuellement être employés. A titre d'exemples, on peut citer les sels des métaux alcalins des acides hydrocarbonés aromatiques sulfoniques ou alkylsulfuriques et les agents tensioactifs non ioniques préférés sont les alcools gras polyoxyéthylénés.

La quantité de tensioactif utilisable est celle couramment mise en œuvre pour la mise en émulsion telle que décrite en particulier dans le brevet US-A-2 891 920.

Les tensioactifs non ioniques (de préférence), ioniques ou amphotères, peuvent être employés seuls ou en mélange entre eux.

En pratique, la dispersion selon l'invention comprend de 30 à 90% de préférence de 30 à 60% en poids d'eau pour 70 à 10% de préférence 70 à 40% en poids de phase non-aqueuse.

Un autre objet de l'invention concerne une formulation aqueuse **F,** utilisable notamment dans la formulation de peintures, comprenant
- une dispersion silicone aqueuse **Y,** selon l'invention et telle que décrite ci-dessus, ladite dispersion silicone étant présente de préférence jusqu'à 150% en poids par rapport au poids total d'une ou des dispersions organiques (liant(s)) et encore plus préférentiellement entre 40 et 100% en poids;
- une charge siliceuse ou non, de préférence choisie parmi le groupe constitué par : silice précipitée, silice pyrogénée, silice colloïdale ou en poudre, carbonates, talc, TiO2 et leurs mélanges;
- une ou plusieurs dispersions organiques (liant(s)), choisies de préférence parmi celles comprenant des (co)polymères de styrène et/ou de l'acide (méth)acrylique; et
   au moins l'un des composés choisi parmi le groupe constitué par:
   - un épaississant choisi parmi le groupe constitué par les épaississants cellulosiques acryliques, les polyuréthanes, les gommes naturelles et leurs mélanges;
   - un agent de coalescence choisi de préférence parmi les solvants organiques et plus préférentiellement encore parmi les glycols et/ou les coupes pétrolières aliphatiques;
   - un mouillant, dispersant de préférence choisi parmi les phosphates et/ou les polyacryliques;
   - un tensioactif;
   - un agent de neutralisation;
   - un biocide;
   - un diluant;
   - un plastifiant, choisi, de préférence parmi les huiles silicones non réactives ;
   - un antimousse; et
   - un pigment ou colorant (organique ou minéral).

Par dispersion organique ou liant, on entend ici un latex de polymères organiques provenant de la (co)polymérisation :
- d'au moins un monomère vinylique choisi parmi le groupe constitué par : le styrène, l'o-méthyle styrène et un vinyl toluène ;
- d'au moins un monomère (méth)acrylate d'alkyle ; et
- éventuellement d'au moins un monomère acide mono ou di-carboxylique insaturé éthylénique.

Un autre objet de l'invention concerne des peintures **P** caractérisées en ce qu'elles comprennent la dispersion silicone aqueuse **Y** ou de la formulation aqueuse **F** selon l'invention et telles que décrites ci-dessus.

Un autre objet de l'invention concerne l'utilisation de la dispersion silicone aqueuse **Y** ou de la formulation aqueuse **F,** selon l'invention et telles que décrites ci-dessus, dans le domaine des peintures.

La peinture selon l'invention peut être appliquée par exemple sur des façades selon les techniques habituelles. A titre d'exemple, elle peut être appliquée sur les surfaces par tout moyen convenable tel que pinceau, brosse, pulvérisateur, etc... Les surfaces sur lesquelles la composition de revêtement selon l'invention est applicable sont de nature diverse : par exemple, métal tel que l'aluminium, bois, ciment, brique avec ou sans enduction préalable par un primaire d'adhérence.

Un autre objet de l'invention concerne l'utilisation pour imprégner un matériau de construction poreux d'une composition non aqueuse d'hydrofugation qui une composition silicone liquide **L** comprenant au moins un mélange **X** selon l'invention et tel que décrit ci-dessus.

Selon un mode de réalisation de l'invention, la composition silicone liquide **L** comprend
a) au moins un mélange **X** selon l'invention et tel que décrit ci-dessus,
b) au moins un alkoxyde métallique **MA** de formule générale (**III**) :

   **V**[(OCH₂CH₂)ₐ-OR⁵]ₙ **(III)**

   dans laquelle :
   - **V** est un métal choisi dans le groupe formé par : Ti, Zr, Ge, Mn et Al ;
   - n = valence de **V** ;
   - les substituants R⁵, identiques ou différents, représentent chacun un radical alkyle, linéaire ou ramifié, en C₁ à C₁₂ ;
   - a est égal à zéro, 1 ou 2 ;
   - avec les conditions selon lesquelles, quand le symbole a est égal à zéro, le radical alkyle R⁵ possède de 2 à 12 atomes de carbone, et quand le symbole a est égal à 1 ou 2, le radical alkyle R⁵ possède de 1 à 4 atomes de carbone ; et
c) au moins un réticulant C de formule générale (IV) :

   Si[(OCH₂CH₂)ₐ-OR]₄ **(IV)**

   dans laquelle :
   les substituants R, identiques ou différents, représentent chacun un radical alkyle, linéaire ou ramifié, en C₁ à C₁₂, et
   - a est égal à zéro, 1 ou 2.

La quantité d'alkoxyde métallique **MA** utilisable est ≥ à 5% poids, de préférence ≥ à 6% en poids et encore plus préférentiellement ≥ à 7% en poids par rapport au mélange **X.**

La quantité de réticulant **C** utilisable est ≥ 4% en poids, de préférence ≥ à 5% en poids et encore plus préférentiellement ≥ à 6% en poids par rapport au mélange **X.**

Un autre objet de l'invention concerne un procédé d'hydrofugation de matériaux de construction poreux dans lequel on applique sur le dit matériau la susdite composition silicone liquide **L** non aqueuse telle que décrite ci-dessus.

Un dernier objet selon l'invention concerne un procédé dans lequel on applique la susdite composition silicone liquide **L** non aqueuse sur un matériau poreux qui est choisi parmi les substrats suivants : pierre, béton, mortier, brique, tuile et bois.

Les exemples et tests suivants sont donnés à titre illustratif et non limitatif. Ils permettent notamment de mieux comprendre l'invention et de faire ressortir tous ses avantages et entrevoir quelques variantes de réalisation.

### EXEMPLES

### A) Matières premières utilisées :

- Triméthylchlorosilane de la société Sigma Aldrich.
- Diméthyldichlorosilane de la société Sigma Aldrich.
- Méthyltrichlorosilane de la société Sigma Aldrich.
- Eau déminéralisée.
- **AH:** Toluène de qualité Normapur de la société VWR International.
- **CA :** Acide chlorhydrique solution aqueuse de la société VWR International (∼37 ou 33% en poids).
- Composé organique **O :** Dehysol^{R} B35 de la société BTC: 2-éthylhexyl ester d'acides gras époxydés (CAS 68082-34-8).

Pour tous les exemples, on entend par pH neutre, un pH de 7 (précision papier pH).

### B) Préparation de mélanges X selon l'invention

### 1. Mélange X1 selon l'invention

Selon un procédé d'hydrolyse directe, un mélange de chlorosilanes, composé de 4,38 g de triméthylchlorosilane, 8,55 g de diméthyldichlorosilane et 26,95 g de méthyltrichlorosilane est ajouté sous balayage d'argon au goutte à goutte dans un réacteur agité contenant préalablement 43 g de toluène **AH,** 43,3 g d'eau et 18,9 g d'une solution d'acide chlorhydrique **CA** à 37% en poids (procédé direct). La température du milieu réactionnel est maintenue entre 5 et 60°C. A la fin de l'addition, 7 g de toluène **AH** sont ajoutés, puis la température du milieu réactionnel est portée à 50°C pendant 1h. A l'issue du maintien en température, le milieu réactionnel est refroidi à 30°C puis 100 g d'eau sont lentement ajoutés afin de diminuer la concentration en acide chlorhydrique de la phase aqueuse. A l'arrêt de l'agitation, le milieu réactionnel se sépare en deux phases. La phase aqueuse est soutirée et la phase organique est lavée à l'eau jusqu'à ce que le pH des eaux de lavage soit neutre. Le solvant de la phase organique est évaporé à 60°C sous une pression inférieure à 5 mBar pendant 2 heures. Sont obtenus 17,6 g de résine silicone **R1,** qui présente une viscosité cinématique de 1209 mm²/s et un taux de fonctions hydroxyles de 0,8% en poids, et dans lesquels est ajouté 0,035 g de Dehysol^{R} B35, composé organique O, afin d'obtenir le mélange **X1.**
L'analyse RMN²⁹Si du mélange **X1** révèle la distribution suivante :

| MOTIFS | % molaire relativement au silicium |
|---|---|
| M | 10,88 |
| D(OH) | 0,70 |
| D | 22,72 |
| T(OH) | 7,86 |
| T | 57,84 |

Le mélange **X1** obtenu selon un procédé d'hydrolyse direct et non pas inverse, en l'absence d'isopropylether durant l'étape **b**) d'hydrolyse directe et contenant du composé organique **O** ajouté lors de l'étape **g**) du procédé présente une stabilité au sens de l'invention supérieure à 6 mois c'est-à-dire que la viscosité cinématique du mélange **X1** n'augmente pas au stockage de plus de 10% relatif.

### 2. Mélange X2 selon l'invention

La préparation du mélange **X2** est similaire à celle du mélange X1 à l'exception de la durée du palier à 50°C qui est de 4 heures au lieu d'une heure. A l'issue de la distillation du solvant, sont obtenus 18.1 g de résine silicone **R2** dans lesquels est ajouté 0,036 g de Dehysol^{R} B35, composé organique **O,** afin d'obtenir le mélange **X2** qui présente une viscosité cinématique de 1404 mm²/s et un taux de fonctions hydroxyles de 0,6% en poids.
L'analyse RMN²⁹Si du mélange **X2** révèle la distribution suivante :

| MOTIFS | % molaire relativement au silicium |
|---|---|
| M | 11,3 |
| D(OH) | 0,70 |
| D | 23,3 |
| T(OH) | 8,3 |
| T | 56,4 |

Le mélange **X2** obtenu selon un procédé d'hydrolyse direct et non pas inverse, en l'absence d'isopropylether durant l'étape **b**) d'hydrolyse directe et contenant du composé organique **O** ajouté lors de l'étape **g**) du procédé présente une stabilité au sens de l'invention supérieure à 6 mois c'est-à-dire la viscosité cinématique du mélange **X2** n'augmente pas au stockage de plus de 10% relatif.

### 3. Mélange X3 selon l'invention

La préparation du mélange **X3** est similaire au mélange X1 à l'exception des quantités d'eau et d'acide chlorhydrique à 37% en poids **CA** présent initialement dans le réacteur avant la coulée du mélange de chlorosilanes qui sont respectivement de 31,7 g et 37,3 g. A l'issue de la distillation du solvant, sont obtenus 18 g de résine silicone **X3** dans lesquels est ajouté 0,036 g de Dehysol^{R} B35, composé organique **O,** afin d'obtenir le mélange **X3** qui présente une viscosité cinématique de 979 mm²/s et un taux de fonctions hydroxyles de 0,83% en poids.
L'analyse RMN²⁹Si du mélange **X3** révèle la distribution suivante:

| MOTIFS | % molaire relativement au silicium |
|---|---|
| M | 10,5 |
| D(OH) | - |
| D | 25,5 |
| T(OH) | 4,7 |
| T | 59,3 |

Le mélange **X3** obtenu selon un procédé d'hydrolyse direct et non pas inverse, en l'absence d'isopropylether durant l'étape **b**) d'hydrolyse directe et contenant du composé organique **O** ajouté lors de l'étape **g**) du procédé présente une stabilité au sens de l'invention supérieure à 6 mois c'est-à-dire la viscosité cinématique du mélange **X3** n'augmente pas au stockage de plus de 10% relatif.

### 4. Mélange X4 selon l'invention

La préparation du mélange **X4** est similaire au mélange **X1** à l'exception du mélange de chlorosilanes qui est composé de 3,01 g de triméthylchlorosilane, 8,9 g de diméthyldichlorosilane et 28 g de méthyltrichlorosilane. A l'issue de la distillation du solvant, sont obtenus 17,6 g de résine silicone **R4,** dans lesquels est ajouté 0,035 g de Dehysol^{R} B35, composé organique **O,** afin d'obtenir le mélange **X4** qui présente une viscosité cinématique de 12319 mm²/s et un taux de fonctions hydroxyles de 1,05% en poids.
L'analyse RMN²⁹Si révèle la distribution suivante :

| MOTIFS | % molaire relativement au silicium |
|---|---|
| M | 7,6 |
| D(OH) | - |
| D | 23,6 |
| T(OH) | 12,0 |
| T | 56,0 |

Le mélange **X4** obtenu selon un procédé d'hydrolyse direct et non pas inverse, en l'absence d'isopropylether durant l'étape **b**) d'hydrolyse directe et contenant du composé organique **O** ajouté lors de l'étape **g**) du procédé présente une stabilité au sens de l'invention supérieure à 6 mois c'est-à-dire la viscosité cinématique du mélange **X4** n'augmente pas au stockage de plus de 10% relatif.

### 5. Mélange X5 selon l'invention

La préparation du mélange **X5** est similaire au mélange **X1** à l'exception du mélange de chlorosilanes qui est composé de 5,99 g de triméthylchlorosilane, 8,16 g de diméthyldichlorosilane et 25,72 g de méthyltrichlorosilane. A l'issue de la distillation du solvant, sont obtenus 18,3 g de résine silicone **R5,** dans lesquels est ajouté 0,036 g de Dehysol^{R} B35, composé organique **O** afin d'obtenir le mélange **X5** qui présente une viscosité cinématique de 300 mm²/s et un taux de fonctions hydroxyles de 0,95% en poids.
L'analyse RMN²⁹Si révèle la distribution suivante :

| MOTIFS | % molaire relativement au silicium |
|---|---|
| M | 14.7 |
| D(OH) | 0.52 |
| D | 21.2 |
| T(OH) | 9.2 |
| T | 54.4 |

Le mélange **X5** obtenu selon un procédé d'hydrolyse direct et non pas inverse, en l'absence d'isopropylether durant l'étape **b**) d'hydrolyse directe et contenant du composé organique **O** ajouté lors de l'étape **g**) du procédé présente une stabilité au sens de l'invention supérieure à 6 mois c'est-à-dire la viscosité cinématique du mélange **X5** n'augmente pas au stockage de plus de 10% relatif.

### 6. Mélange X6 selon l'invention

Un mélange de chlrorosilanes constitué de 174 g de triméthylchlorosilane, 339 g de diméthyl dichlorosilane et 1069 g de méthyltrichlorosilane est ajouté lentement dans un réacteur agité de 10 litres contenant 1800 g d'eau et 1800 g de toluène **AH.** La température du milieu réactionnel est maintenue entre 5 et 60°C.
En fin de coulée des chlorosilanes la température du milieu réactionnel est portée à 50°C pendant 1h. A l'issue du maintien en température, 200 g de toluène et 3000 g d'eau sont ajoutés dans le mélange précédent. Après décantation, soutirage de la phase aqueuse et lavage de la phase organique jusqu'à obtention d'un pH neutre, le solvant de la phase organique est évaporé à 60°C sous une pression inférieure à 5 mBar pendant 8 heures. Après huit heures de dévolatilisation, à la résine silicone obtenue **R6** est ajouté 0,2% de Dehysol^{R} B35, composé organique **O.** Le mélange **X6** ainsi obtenu présente une viscosité cinématique de 1270 mm²/s et un taux de fonctions hydroxyles de 0,64% en poids.
Le mélange **X6** obtenu selon un procédé d'hydrolyse direct et non pas inverse, en l'absence d'isopropylether durant l'étape **b**) d'hydrolyse directe et contenant du composé organique **O** ajouté lors de l'étape **g**) du procédé présente une stabilité au sens de l'invention supérieure à 6 mois c'est-à-dire la viscosité cinématique du mélange **X6** n'augmente pas au stockage de plus de 10% relatif.

### C) Préparation des exemples comparatifs

### 1. Essai comparatif N°1

La préparation de l'essai comparatif N°1 est similaire au mélange X1 à l'exception du fait que le toluène est remplacé par de l'isopropyléther. A l'issue de la distillation du solvant, sont obtenus 19 g de résine silicone, de viscosité cinématique 150 mm²/s et comportant 0,54% en poids de motifs hydroxyles, hors cible en termes de viscosité c'est-à-dire la viscosité n'est pas comprise entre 300 et 25000 mm2/s. Toutes choses égales par ailleurs, l'utilisation d'isopropyléther en remplacement du toluène ne permet pas d'obtenir une résine conforme à l'invention.

### 2. Essai comparatif N°2

Un mélange de chlorosilanes, composée de 8,57 g de diméthyldichlorosilane et 26,95 g de méthyltrichlorosilane est ajouté sous balayage d'argon au goutte à goutte dans un réacteur agité contenant 38,4 g de toluène, 38,7 g d'eau et 16,8 g d'une solution d'acide chlorhydrique à 37% en poids. La température du milieu réactionnel est maintenue entre 5 et 60°C. A la fin de l'addition, 6,2 g de toluène sont ajoutés, puis la température du milieu réactionnel est portée à 50°C pendant 1h. A l'issue du maintien en température, le milieu réactionnel est refroidi à 30°C puis 100 g d'eau sont lentement ajoutés afin de diminuer la concentration en acide chlorhydrique de la phase aqueuse. A l'arrêt de l'agitation, il n'y a pas de séparation des phases et du solide blanc se présente abondamment sur les parois. L'absence de triméthylchlorosilane dans le mélange **A** ne permet pas d'obtenir une résine telle que définie selon l'invention. Il est du mérite de l'inventeur d'avoir identifié la bonne plage de concentration du triméthylchlorosilane dans le mélange **A.**

### 3. Essai comparatif N°3

Un mélange de chlorosilanes, composé de 2,05 g de triméthylchlorosilane, 9,10 g de diméthyldichlorosilane et 28,80 g de méthyltrichlorosilane est ajouté sous balayage d'argon au goutte à goutte dans un réacteur agité contenant 43 g de toluène, 43,3 g d'eau et 18,9 g d'une solution d'acide chlorhydrique à 37% en poids. La température du milieu réactionnel est maintenue entre 5 et 60°C. A la fin de l'addition, 7 g de toluène sont ajoutés, puis la température du milieu réactionnel est portée à 50°C pendant 1h. A l'issue du maintien en température, le milieu réactionnel est refroidi à 30°C puis 100 g d'eau sont lentement ajoutés afin de diminuer la concentration en acide chlorhydrique de la phase aqueuse. A l'arrêt de l'agitation, le milieu réactionnel n'est pas séparable car hétérogène : présence de gels solides. La présence de 5% de triméthylchlorosilane dans le mélange **A** n'est pas suffisante pour éviter la formation de gels. Il est du mérite de l'inventeur d'avoir identifié la bonne plage de concentration du triméthylchlorosilane dans le mélange **A.**

### 4. Essai comparatif N°4

Un mélange de chlorosilanes, composé de 2,02 g de triméthylchlorosilane, 9,10 g de diméthyldichlorosilane et 28,80 g de méthyltrichlorosilane est ajouté sous balayage d'argon au goutte à goutte dans un réacteur agité contenant 43 g de toluène, 31,7 g d'eau et 37,3 g d'une solution d'acide chlorhydrique à 37% en poids. La température du milieu réactionnel est maintenue entre 5 et 60°C. A la fin de l'addition, 7 g de toluène sont ajoutés, puis la température du milieu réactionnel est portée à 50°C pendant 1h. A l'issue du maintien en température, le milieu réactionnel est refroidi à 30°C puis 100 g d'eau sont lentement ajoutés afin de diminuer la concentration en acide chlorhydrique de la phase aqueuse. A l'arrêt de l'agitation, le milieu réactionnel se sépare en deux phases. La phase aqueuse est soutirée mais le milieu est hétérogène : présence de gels solides dans la phase organique. La présence de 5% de triméthylchlorosilane dans le mélange **A** n'est pas suffisante pour éviter la formation de gels même en présence d'une quantité de solution d'acide chlorhydrique à 37% plus importante par rapport à l'essai comparatif N°3. Il est du mérite de l'inventeur d'avoir identifié la bonne plage de concentration du triméthylchlorosilane dans le mélange **A.**

### 5. Essai comparatif N°5

Un mélange de chlorosilanes, composé de 12,03 g de triméthylchlorosilane, 6,77 g de diméthyldichlorosilane et 21,18 g de méthyltrichlorosilane est ajouté sous balayage d'argon au goutte à goutte dans un réacteur agité contenant 43 g de toluène, 43,3 g d'eau et 18,9 g d'une solution d'acide chlorhydrique à 37% en poids. La température du milieu réactionnel est maintenue entre 5 et 60°C. A la fin de l'addition, 7 g de toluène sont ajoutés, puis la température du milieu réactionnel est portée à 50°C pendant 1h. A l'issue du maintien en température, le milieu réactionnel est refroidi à 30°C puis 100 g d'eau sont lentement ajoutés afin de diminuer la concentration en acide chlorhydrique de la phase aqueuse. A l'arrêt de l'agitation, le milieu réactionnel se sépare en deux phases. La phase aqueuse est soutirée et la phase organique lavée à l'eau jusqu'à ce que le pH des eaux de lavage soit neutre. Le solvant de la phase organique est évaporé à 60°C sous une pression inférieure à 5 mBar pendant 2 heures. Sont obtenus 18,8 g de résine silicone, de viscosité 23 mm²/s et comportant 0,8% en poids de fonctions hydroxyles, hors cible en termes de viscosité c'est-à-dire la viscosité n'est pas comprise entre 300 et 25000 mm2/s.

La présence de 30% de triméthylchlorosilane dans le mélange **A** ne permet pas d'obtenir une résine telle que définie selon l'invention. Il est du mérite de l'inventeur d'avoir identifié la bonne plage de concentration du triméthylchlorosilane dans le mélange **A.**

### D) Influence Dehysol^{R} B35, composé organique O, sur stabilité du mélange X

### 1. Mélanges X7 et X7bis selon l'invention

Selon un procédé d'hydrolyse directe, un mélange de chlrorosilanes constitué de 174 g de triméthylchlorosilane, 339 g de dimethyl dichlorosilane et 1069 g de méthyltrichlorosilane est ajouté lentement dans un réacteur agité de 10 litres contenant 1718 g d'eau, 750 g d'acide chlorhydrique à 33% **CA** et 1706 g de toluène **AH.** La température du milieu réactionnel est maintenue entre 5 et 60°C.
278 g de toluène sont ajoutés en fin de coulée des chlorosilanes.
Puis la température du milieu réactionnel est portée à 50°C pendant 1h.
A l'issue du maintien en température, le milieu réactionnel est refroidi à 30°C et 3967 g d'eau sont ajoutés dans le mélange précédent.
Après décantation, soutirage de la phase aqueuse et lavage de la phase organique jusqu'à obtention d'un pH neutre, le solvant de la phase organique est évaporé à 60°C sous une pression inférieure à 5 mBar pendant 2 à 5 heures.

### a) Après deux heures de dévolatilisation, un prélèvement est effectué.

La résine silicone obtenue **R7** de ce prélèvement présente une viscosité cinématique de 1938 mm2/s et un taux de fonctions hydroxyles de 0,52%.
Dans une partie de la résine silicone est ajouté 0,2% en poids de Dehysol^{R} B35, composé organique **O.** Le mélange **X7** est ainsi obtenu.
L'autre partie est conservée sans ajout de Dehysol^{R} B35, composé organique **O.**
Le suivi de viscosité des deux parties au cours du temps montre l'absence d'augmentation en présence de Dehysol^{R} B35, composé organique **O.**
Le composé organique **O** permet donc de stabiliser la résine selon l'invention c'est-à-dire que la viscosité cinématique du mélange **X7** n'augmente pas au stockage de plus de 10% relatif.

Par contre, la partie sans Déhysol^{R} B35, c'est-à-dire sans composé organique **O,** voit sa viscosité cinématique multipliée par 1,85 après six mois de stockage.
La résine en l'absence du composé organique O n'est pas stable au stockage.

L'ajout du composé organique O est nécessaire à la stabilité de la résine qui peut être éventuellement mise en émulsion.

### b) En parallèle du prélèvement, la dévolatilisation est poursuivie. Après cinq heures de dévolatilisation, à la résine silicone obtenue R7bis est ajouté 0,2% de Dehysol^{R} B35, composé organique O. Le mélange X7bis ainsi obtenu présente une viscosité cinématique de 1860 mm2/s et un taux de fonctions hydroxyles de 0,59% en poids.

### 2. Mélanges X8 et X9 selon l'invention

Selon un procédé d'hydrolyse directe, un mélange de chlrorosilanes constitué de 174 g de triméthylchlorosilane, 339 g de diméthyl dichlorosilane et 1069 g de méthyltrichlorosilane est ajouté lentement dans un réacteur agité de 10 litres contenant 3345 g d'eau, 1647 g d'acide chlorhydrique à 33% **CA** et 1706 g de toluène **AH.** La température du milieu réactionnel est maintenue entre 5 et 60°C.
278 g de toluène sont ajoutés en fin de coulée des chlorosilanes.
Puis la température du milieu réactionnel est portée à 50°C pendant 1h.
A l'issue du maintien en température, le milieu réactionnel est refroidi à 30°C, 2000 g d'eau sont ajoutés dans le mélange précédent.
Après décantation, soutirage de la phase aqueuse et lavage de la phase organique jusqu'à obtention d'un pH neutre, le solvant de la phase organique est évaporé à 60°C sous une pression inférieure à 5 mBar pendant 2 à 5 heure 30 minutes.
a)Après deux heures de dévolatilisation, un prélèvement est effectué. A la résine silicone obtenue **R8** est ajouté 0,2% de Dehysol^{R} B35, composé organique O. Le mélange **X8** ainsi obtenu présente un taux de fonctions hydroxyles de 0,19% en poids et une viscosité de 5485 mm2/s qui n'augmente pas au stockage. Le composé organique **O** permet donc de stabiliser la résine selon l'invention c'est-à-dire que la viscosité cinématique du mélange **X8** n'augmente pas au stockage de plus de 10% relatif.
b)En parallèle du prélèvement, la dévolatilisation est poursuivie. Après cinq heures 30 minutes de dévolatilisation, à la résine silicone obtenue **R9** est ajouté 0,2% de Dehysol^{R} B35, composé organique **O.** Le mélange **X9** ainsi obtenu présente une viscosité de 3487 mm2/s et un taux de fonctions hydroxyles de 0,21% en poids.

### E) Préparation des émulsions

### 1. Matières premières utilisées:

- Mélange **X** de résine silicone **R** et d'un composé organique **O** contenant au moins un groupe époxy **E** selon l'invention.
- Silane alkylaminé hydroxylé hydrosoluble : hydrolysat aqueux de gamma-aminopropyltriéthoxysilane à 20% de matières actives, duquel l'alcool a été éliminé par stripping (produit commercial Silquest^{R} VS142 de Momentive)
- Silane à groupement alcoxy: OTES = octyltriéthoxysilane de Sigma-Aldrich
- Tensioactifs **S:** un alcool gras (chaîne de 13 carbones) éthoxylé (8 motifs éthoxy), commercialisé sous la dénomination ROX® par la Société SOLVAY

### 2. Mélange X10 selon l'invention

Selon un procédé d'hydrolyse directe, un mélange de chlrorosilanes constitué de 174 g de triméthylchlorosilane, 339 g de diméthyl dichlorosilane et 1069 g de méthyltrichlorosilane est ajouté lentement dans un réacteur agité de 10 litres contenant 1800 g d'eau, 670 g d'acide chlorhydrique à 37% en poids **CA** et 1706 g de toluène **AH.** La température du milieu réactionnel est maintenue entre 5 et 60°C.
278 g de toluène sont ajoutés en fin de coulée des chlorosilanes.
Puis la température du milieu réactionnel est portée à 50°C pendant 1h.
A l'issue du maintien en température, le milieu réactionnel est refroidi à 30°C, 3967 g d'eau sont ajoutés dans le mélange précédent.
Après décantation, soutirage de la phase aqueuse et lavage de la phase organique jusqu'à obtention d'un pH neutre, le solvant de la phase organique est évaporé à 60°C sous une pression inférieure à 5 mBar pendant 8 heures. Après huit heures de dévolatilisation, à la résine silicone obtenue est ajouté 0,2% de Dehysol^{R} B35, composé organique **O.** Le mélange **X10** ainsi obtenu présente une viscosité de 1019 mm²/s et un taux de fonctions hydroxyles de 0,49% en poids.

### 3. Procédé de préparation des dispersions aqueuses Y

Plusieurs protocoles de préparation de dispersions aqueuses **Y** sont envisageables. Sans que cela ne soit limitatif, on retient dans le présent exemple celui consistant à :
1) Mélanger 15.8g d'eau et 25,3 g de tensioactif **S** dans une cuve de 1L munie d'une ancre rotative
2) Incorporer, dans ce mélange eau et tensioactif **S,** 342,8 g du mélange **X** puis 14,5 g de silane OTES, cette incorporation étant réalisée progressivement et sous agitation d'environ 100 rpm de manière à obtenir une émulsion huile dans l'eau.
3) Réaliser un post-ajout de 14,5 g de silane hydrosoluble Silquest VS142 et continuer d'agiter durant environ 1 heure.
4) Ajouter 184,6 g d'eau pour diluer l'émulsion au taux de matières actives voulu.

On obtient alors un liquide à l'aspect blanc, dont le diamètre moyen en volume, déterminée par granulométrie laser à l'aide d'un Mastersizer 2000 (Malvern) est donnée ci-dessous pour 3 résines silicones différentes.

| Emulsion | **Y1** | **Y2** | **Y3** |
|---|---|---|---|
| Mélange **X** mis en émulsion | **X9** | **X10** | **X7bis** |
| Taux d'OH (% en poids) du mélange **X selon l'invention** | 0,21% | 0,49% | 0,59% |
| Viscosité du mélange **X selon l'invention** | 3487 mm²/s | 1019 mm²/s | 1860 mm²/s |
| D[4,3]de l'émulsion | 0,197µm | 0,179 µm | 0,201µm |

La granulométrie des émulsions est mesurée par diffraction laser à l'aide d'un granulomètre Master Sizer 2000 - Hydro 2000G selon la norme ISO 13320 (2009).

### F) Formulation des peintures

Afin d'évaluer l'apport des émulsions **Y** de mélanges **X** sur les propriétés finales de la peinture, deux types de peintures sont préparées. L'une **P1** à un ratio CPV/CPVC de 1,13 et l'autre **P2** à un ratio CPV/CPVC de 0,80. Leurs compositions sont données dans le tableau ci-dessous.
La concentration pigmentaire volumique critique CPVC est la valeur de la concentration pigmentaire volumique pour laquelle le liant remplit très exactement le volume laissé disponible entre les particules de matières pulvérulentes supposées au contact et au-dessus de laquelle certaines propriétés du feuil sont notablement modifiées.
La concentration pigmentaire volumique CPV est le rapport, exprimé en pourcentage, du volume total des pigments et/ou des matières de charge et/ou d'autres particules solides ne formant pas de film, contenues dans un produit, au volume total des matières non volatiles.

Les constituants et composition des peintures sont les suivantes :

| constituant | fournisseur | Fonction/nature chimique | masse (g) pour 100g de peinture de CPV/CPVC=1,13 **P1** | masse (g) pour 100g de peinture de CPV/CPVC=0,8 **P2** |
|---|---|---|---|---|
| Eau | | | 26,2 | 24,3 |
| Ecodis™ P90 | Coatex | dispersant | 0,5 | 0,5 |
| BYK^{R} 037 | BYK | antimousse | 0,2 | 0,2 |
| Tiona^{R} 595 | Cristal | Pigment TiO₂ | 14 | 12,2 |
| Durcal^{R} 5 | Omya | Carbonate de calcium | 25 | 19,2 |
| Calibrite^{R} SL | Omya | Carbonate de calcium | 11 | 8,3 |
| Talc Luzenac^{R} 10MO | Imerys | Talc | 6 | 4,4 |
| Craymul^{R} 2423 | Cray Valley | Styrène acrylique | 9,2 | 17,6 |
| **Emulsion Y1 ou Y2 ou Y3** | **selon l'invention** | **Emulsion silicone** | **5,6** | **10,7** |
| Dowanol™ DPnB | Dow Chemicals | Agent de coalescence | 0,3 | 0,7 |
| BYK^{R} E420 | BYK | Epaississant | 0,4 | 0,4 |
| Coapur™ 830W | Coatex | Epaississant polyuréthane | 1,3 | 1,3 |
| Acticide^{R} MBS | Thor | Biocide | 0,3 | 0,3 |

### 1. Test de la résistance à l'abrasion humide (RAH)

Une peinture appliquée à l'intérieur ou à l'extérieur doit pouvoir se nettoyer facilement sans être dégradée. Pour ce type de produit, le pouvoir liant du polymère, c'est à dire son aptitude à assurer la cohésion de l'ensemble, est un élément déterminant.

Un moyen de quantifier cette propriété consiste à évaluer la résistance à l'abrasion humide d'une peinture.

### DEFINITIONS DE LA RESISTANCE A L'ABRASION HUMIDE

Selon la norme ISO 11998, la résistance à l'abrasion humide est égale à la perte d'épaisseur d'un film de peinture après un cycle d'abrasion défini et réalisé à l'aide d'un appareil normalisé.

### PRINCIPE

Il s'agit d'évaluer l'aptitude d'un feuil de peinture d'épaisseur définie, à résister à l'action abrasive exercée par le mouvement de va et vient d'une brosse ou d'un tampon abrasif, en milieu aqueux.

### EXPRESSION DES RESUL TATS

### Pour la norme ISO 11998

- Pour chaque éprouvette, appliquer la formule suivante : Δₘ ^{∗} 10⁶ / (39 ^{∗} 387 ^{∗} dₛ) où:
   Δₘ est la différence de poids des éprouvette avant et après le test,
   dₛ est la densité sèche de la peinture.
- Pour chaque peinture, calculer la moyenne et l'écart-type.
- Exprimer le résultat en µm, ce qui correspond à une perte de l'épaisseur du film de peinture. Il existe une classification des peintures en fonction de la perte d'épaisseur et du nombre de cycles d'abrasion :
   Classe 1 : < 5 µm à 200 frottements, pour les peintures à taux de liant élevé.
   *Classe 2 : ≥ 5 µm et < 20 µm à 200 frottements, la peinture est lessivable.*
   *Classe 3 : ≥ 20 µm et < 70µm à 200 frottements, la peinture est lavable.*
   *Classe 4 : < 70 µm à 40 frottements*
   *Classe 5 : ≥ 70 µm à 40 frottements.*

### 2. Perméabilité à l'eau (W24)

Le mode opératoire (norme NF EN 1062-3, Février 1999) spécifie une méthode de détermination de la perméabilité à l'eau liquide des produits de peinture et de produits assimilés, appliqués sur la maçonnerie et béton extérieurs. Cette méthode est applicable aux produits de peinture et systèmes de revêtement pour supports poreux comme par exemple : briques, béton et enduits.

### PRINCIPE

Les revêtements pour maçonnerie et béton extérieurs jouent un rôle important pour prévenir la pénétration de l'eau de ruissellement dans les supports minéraux poreux. Ce critère est évalué au moyen de blocs minéraux de grande porosité dont l'une des faces est revêtue par le revêtement ou le système de revêtement. L'éprouvette est plongée dans de l'eau, dans des conditions déterminées et les éprouvettes sont pesées à des intervalles de temps réguliers. La perméabilité à l'eau liquide est déterminée par le changement de masse lorsque le changement de masse est directement proportionnel à la racine carrée de l'intervalle de temps.

### EXPRESSION DES RESULTATS

Déterminer l'augmentation de la masse d'eau comme étant la fonction de la racine carrée du temps. La pente de la partie linéaire de la courbe est le coefficient de la transmission de l'eau liquide W en Kg/m².Vt des heures. Pour obtenir le coefficient W il est nécessaire de diviser l'augmentation de la masse par la surface, en m², ou diviser la pente par la surface. La surface sera la surface non couverte par la paraffine. Normalement, W est calculé pour une période de 24 heures. Si la partie de la courbe est obtenue avant 24 heures, le nombre d'heures doit être indiqué comme indice de W (ex : W6).

### 3. Perméabilité à la vapeur Sd

Le mode opératoire permet, selon la norme NF EN ISO 7783-2, de déterminer la capacité d'un film de peinture à laisser passer la vapeur d'eau.

La peinture est appliquée sur une plaque de polyéthylène poreux de 250 µm d'épaisseur. Après plusieurs cycles lavage/séchage, les plaques enduites sont découpées et placées sur des coupelles contenant 150mL d'une solution saturée de dihydrogéno-phosphate d'ammonium. A partir de la perte de masse mesurée, on détermine le facteur «Sd» correspondant à l'épaisseur (en mètres) de la couche d'air au repos permettant un flux de vapeur d'eau équivalent au flux observé à travers le feuil de peinture.

### 4. Résultats de l'évaluation des peintures :

| Dispersion aqueuse utilisée dans la peinture type **P1** ou **P2** | Peinture type **P1 CPV/CPVC=1,13** | | Peinture type **P2 CPV/CPVC=0,8** |
|---|---|---|---|
| | RAH (µm) | W24 (kg/m².h^{0.5}) | Sd (m) |
| Emulsion **Y1** | 12,5 | 0,10 | 0,12 |
| Emulsion **Y2** | 11,5 | 0,10 | 0,06 |
| Emulsion **Y3** | 14,5 | 0,10 | 0,02 |

Ces peintures présentent des performances satisfaisantes, correspondant au classement suivant d'après les normes citées ci-dessus : classe 2 pour la RAH (entre 5 et 20 µm), classe 3 pour le W24 (≤0,10 kg/m².h^{0.5}) et classe 1 pour le Sd (<0,14 m).

### G) Utilisation d'une composition silicone liquide L non aqueuse en tant qu'hydrofugeant de matériaux de construction poreux

### 1. Matières premières utilisées

- Mélange **X** de résine silicone **R** et d'un composé organique **O** contenant au moins un groupe époxy **E** selon l'invention.
- Titanate de butyle **MA** Ti(OBu)₄ de la société Dorf Ketal Specialty Catalysts LLC (USA)
- Silicate d'éthyle **C** Si(OEt)₄ de la société Bluestar Silicones
- White Spirit de la société Quimidroga S.A. (Espagne)

### 2. Formulation de la composition silicone L1 non aqueuse

Plusieurs protocoles de préparation de la composition silicone liquide **L** non aqueuse sont envisageables. Sans que cela ne soit limitatif, on retient dans le présent exemple celui consistant à introduire et homogénéiser dans un bécher de 150mL, 4,2 g de mélange **X8** selon l'invention, 0,32 g de titanate de butyle, 0,22 g de silicate d'éthyle et 71,4 g de White Spirit. La composition silicone **L1** non aqueuse est obtenue.

### 3. Traitement de pierres

Après homogénéisation, la composition silicone **L1** non aqueuse est utilisée pour les traitements suivants :
- 3 pierres (ici pierres de Savonnières) sont traitées par trempage dans la solution pendant une durée de 2 fois 10 secondes à une minute d'intervalle.
- On laisse sécher les pierres pendant 15 jours à 23°C sous une atmosphère à 50% d'humidité relative.

### 4. Evaluation de l'hydrofugation

L'hydrofugation est alors évaluée par reprise d'eau par capillarité : les pierres traitées sont placées au contact de l'eau puis sont pesées régulièrement. On effectue une moyenne sur les 3 pierres, et on détermine la diminution d'absorption d'eau en normalisant la reprise en eau des échantillons par celle d'un témoin non-traité. On obtient alors au bout de 28 jours au contact de l'eau une diminution de l'absorption d'eau de 90%, traduisant une bonne efficacité d'hydrofugation des pierres traitées.

## Revendications

1. Procédé de préparation d'un mélange **X** stable au stockage à savoir dont la viscosité cinématique mesurée selon la norme ASTM D445-94 n'augmente pas au stockage de plus de 10% relatif durant une période d'au moins 6 mois, comprenant :
i. une résine silicone **R** constituée des motifs siloxyles M, D et T avec :
• M étant un motif siloxyle de formule : (Z¹)₃SiO_{1/2},
• D étant un motif siloxyle de formule : (Z²)₂SiO_{2/2}, et
• T étant un motif siloxyle de formule : Z³SiO_{3/2}
formules dans lesquelles les symboles Z¹, Z² et Z³, identiques ou différents, représentent chacun :
- un radical alkyle linéaire ou ramifié contenant de 1 à 8 atomes de carbone, et de préférence le radical alkyle est choisi parmi le groupe constitué par un méthyle, un éthyle, un propyle, ou un octyle, et encore plus préférentiellement le radical est un méthyle,
- un radical cycloalkyle contenant de 5 à 8 atomes de carbone, éventuellement substitué par au moins un halogène,
- un radical aryle contenant de 6 à 12 atomes de carbone éventuellement substitué par au moins un halogène, de préférence un phényle ou un dichlorophényle,
- un radical ayant une partie alkyle contenant de 5 à 14 atomes de carbone et une partie aryle contenant de 6 à 12 atomes de carbone éventuellement substituée par au moins un halogène, un radical alkyle contenant de 1 à 6 atomes de carbones et/ou un radical alkoxyle contenant de 1 à 3 atomes de carbone,
- un radical hydroxyle,
- un atome d'hydrogène, ou
- un radical alcényle contenant de 2 à 6 atomes de carbone; et
avec la condition que pour au moins un motif D ou T au moins un symbole Z² ou Z³ est un radical hydroxyle, et
ii. au moins un composé organique **O** contenant au moins un groupe époxy **E,**
ledit procédé comprenant les étapes a) à g) suivantes :
a) un mélange **A** est préparé à partir de:
∘ 60 à 71% en poids d'un chlorosilane de formule R¹SiCl₃,
∘ 15 à 25% en poids d'un chlorosilane de formule (R²)₂SiCl₂,
∘ 7,5 à 20% en poids d'un chlorosilane de formule (R³)₃SiCl, et
∘ éventuellement un hydrocarbure aromatique **AH,**
formules dans lesquelles les symboles R¹, R² et R³, identiques ou différents, représentent chacun:
▪ un radical alkyle linéaire ou ramifié contenant de 1 à 8 atomes de carbone, et de préférence le radical alkyle est choisi parmi le groupe constitué par un méthyle, un éthyle, un propyle, ou un octyle, et encore plus préférentiellement le radical est un méthyle,
▪ un radical cycloalkyle contenant de 5 à 8 atomes de carbone cycliques, éventuellement substitué par au moins un halogène,
▪ un radical aryle contenant de 6 à 12 atomes de carbone pouvant être éventuellement substitué par au moins un halogène, de préférence phényle ou dichlorophényle,
▪ un radical ayant une partie alkyle contenant de 5 à 14 atomes de carbone et une partie aryle contenant de 6 à 12 atomes de carbone éventuellement substituée par au moins un halogène, un alkyle contenant de 1 à 6 atomes de carbones et/ou un alkoxyle contenant de 1 à 3 atomes de carbone,
▪ un atome d'hydrogène, et
▪ un radical alcényle contenant de 2 à 6 atomes de carbone ;
b) le mélange **A** est ajouté sous agitation et en maintenant une température comprise entre 5 et 60°C, à un mélange biphasique **B** constitué d'une phase aqueuse et d'une phase solvant préparé à partir d'eau, d'un hydrocarbure aromatique **AH** et éventuellement d'une solution aqueuse d'acide chlorhydrique **CA,** de manière à effectuer une hydrolyse des chlorosilanes du mélange **A,**
c) éventuellement l'agitation est maintenue pendant au moins 1 heure, de préférence de 1 à 8 heures à une température comprise entre 30 et 60 °C permettant une réaction de condensation post-hydrolyse,
d) l'agitation est arrêtée de manière à séparer une phase aqueuse et une phase solvant,
e) la phase solvant est isolée et lavée à l'eau, et de préférence jusqu'à ce que le pH des eaux de lavage soit neutre,
f) la résine silicone **R** est isolée de la phase solvant de préférence par dévolatilisation, et
g) au moins un composé organique **O** contenant au moins un groupe époxy **E** est ajouté sous agitation à ladite résine silicone **R** obtenue à l'étape f) permettant d'obtenir ledit mélange **X.**

2. Procédé selon la revendication 1 dans lequel à l'étape a) le mélange **A** est préparé à partir de:
∘ 60 à 71% en poids d'un chlorosilane de formule R¹SiCl₃,
∘ 19 à 25% en poids d'un chlorosilane de formule (R²)₂SiCl₂,
∘ 7,5 à 16,5% en poids d'un chlorosilane de formule (R³)₃SiCl, et
∘ éventuellement un hydrocarbure aromatique **AH,**
formules dans lesquelles les symboles R¹, R² et R³, identiques ou différents, représentent chacun:
▪ un radical alkyle linéaire ou ramifié contenant de 1 à 8 atomes de carbone, et de préférence le radical alkyle est choisi parmi le groupe constitué par un méthyle, un éthyle, un propyle, ou un octyle, et encore plus préférentiellement le radical est un méthyle,
▪ un radical cycloalkyle contenant de 5 à 8 atomes de carbone cycliques, éventuellement substitué par au moins un halogène,
▪ un radical aryle contenant de 6 à 12 atomes de carbone pouvant être éventuellement substitué par au moins un halogène, de préférence phényle ou dichlorophényle,
▪ un radical ayant une partie alkyle contenant de 5 à 14 atomes de carbone et une partie aryle contenant de 6 à 12 atomes de carbone éventuellement substituée par au moins un halogène, un alkyle contenant de 1 à 6 atomes de carbones et/ou un alkoxyle contenant de 1 à 3 atomes de carbone,
• un atome d'hydrogène, et
▪ un radical alcényle contenant de 2 à 6 atomes de carbone ;

3. Procédé selon la revendication 1 ou 2 dans lequel à l'étape g) le composé organique **O** contenant au moins un groupe époxy **E** est ajouté de manière à ce que sa teneur en poids soit comprise entre 0,1% et 1% par rapport au poids de ladite résine silicone **R** et de préférence entre 0,1% et 0,75% par rapport au poids de ladite résine silicone **R.**

4. Procédé selon l'une quelconque des revendications précédentes dans lequel à l'étape g) le composé organique **O** contenant au moins un groupe époxy **E** est un ester d'acides gras époxydés.

5. Procédé selon l'une quelconque des revendications précédentes dans lequel à l'étape g) le composé organique **O** contenant au moins un groupe époxy **E** est le 2-éthylhexyl ester acides gras de soja époxydés.

6. Procédé selon la revendication 1 ou 2 dans lequel à l'étape b) le mélange biphasique **B** est constitué d'eau, d'une solution aqueuse d'acide chlorhydrique **CA** et d'un hydrocarbure aromatique **AH,** et la concentration en acide chlorhydrique est inférieure à 25% en poids par rapport à la phase aqueuse du mélange biphasique **B.**

7. Procédé selon la revendication 1 ou 2 dans lequel à l'étape b), après que le mélange **A** soit ajouté à un mélange biphasique **B,** la concentration en hydrocarbure aromatique **AH** est comprise entre 40 et 70% en poids par rapport au poids total des chlorosilanes mis en œuvre et de l'hydrocarbure aromatique **AH,** de préférence entre 49 et 61% en poids par rapport au poids total de chlorosilanes mis en oeuvre et de l'hydrocarbure aromatique **AH.**

8. Procédé selon l'une quelconque des revendications 1, 2, 6 et 7 dans lequel l'hydrocarbure aromatique **AH** est choisi parmi le groupe constitué par : le toluène, le xylène et leur mélange.

9. Mélange **X** stable au stockage à savoir dont la viscosité cinématique mesurée selon la norme ASTM D445-94 n'augmente pas au stockage de plus de 10% relatif durant une période d'au moins 6 mois, susceptible d'être obtenu par le procédé tel que décrit selon l'une quelconque des revendications 1 à 8 constitué d'une résine silicone **R** telle que décrite selon la revendication 1 et un composé organique **O** contenant au moins un groupe époxy **E** tel que décrit selon l'une quelconques des revendications 1 à 5.

10. Dispersion silicone aqueuse **Y** comprenant :
• au moins un mélange **X** tel que décrit selon la revendication 9,
• au moins un tensioactif **S,** et
• de l'eau **W.**

11. Dispersion silicone aqueuse **Y** selon la revendication 10 **caractérisée en ce qu'**elle se présente sous la forme d'une émulsion huile dans eau.

12. Formulation aqueuse **F,** utilisable notamment dans la formulation de peintures, comprenant :
- une dispersion silicone aqueuse **Y** telle que décrite selon la revendication 10 ou 11, ladite dispersion silicone étant présente de préférence jusqu'à 150% en poids par rapport au poids total d'une ou des dispersions organiques et encore plus préférentiellement entre 40 et 100% en poids ;
- une charge siliceuse ou non, de préférence choisie parmi le groupe constitué par : silice précipitée, silice pyrogénée, silice colloïdale ou en poudre, carbonates, talc, TiO2 et leurs mélanges ;
- une ou plusieurs dispersions organiques, choisies de préférence parmi celles comprenant des (co)polymères de styrène et/ou de l'acide (méth)acrylique; et
au moins l'un des composés choisi parmi le groupe constitué par:
- un épaississant choisi parmi le groupe constitué par les épaississants cellulosiques acryliques, les polyuréthanes, les gommes naturelles et leurs mélanges;
- un agent de coalescence choisi de préférence parmi les solvants organiques et plus préférentiellement encore parmi les glycols et/ou les coupes pétrolières aliphatiques;
- un mouillant, dispersant de préférence choisi parmi les phosphates et/ou les polyacryliques;
- un tensioactif;
- un agent de neutralisation;
- un biocide;
- un diluant;
- un plastifiant, choisi, de préférence parmi les huiles silicones non réactives ;
- un antimousse; et
- un pigment ou colorant (organique ou minéral).

13. Peinture **P** comprenant la dispersion silicone aqueuse **Y** telle que décrite selon la revendication 10 ou 11 ou la formulation aqueuse **F** telle que décrite selon la revendication 12.

14. Utilisation de la dispersion silicone aqueuse **Y** telle que décrite selon la revendication 10 ou 11 ou de la formulation aqueuse **F** telle que décrite selon la revendication 12 dans le domaine des peintures.

15. Utilisation pour imprégner un matériau de construction poreux d'une composition non aqueuse d'hydrofugation qui est une composition silicone liquide **L** comprenant au moins un mélange **X** tel que décrit selon la revendication 9.

16. Procédé d'hydrofugation de matériaux de construction poreux dans lequel on applique sur le dit matériau la composition silicone liquide **L** non aqueuse telle que décrite selon la revendication 15.

17. Procédé selon la revendication 16 dans lequel le-dit matériau de construction poreux est choisi parmi les substrats suivants : pierre, béton, mortier, brique, tuile et bois.

## Patentansprüche

1. Verfahren zur Herstellung einer Mischung **X,** die lagerstabil ist, d. h. deren gemäß der ASTM-Norm D445-94 gemessene kinematische Viskosität bei Lagerung über einen Zeitraum von mindestens 6 Monaten nicht um mehr als 10 % relativ zunimmt, umfassend:
i. ein Silikonharz **R** aus Siloxyleinheiten M, D und T, wobei:
• M für eine Siloxyleinheit der Formel: (Z¹)₃SiO_{1/2} steht,
• D für eine Siloxyleinheit der Formel: (Z²)₂SiO_{2/2} steht und
• T für eine Siloxyleinheit der Formel: Z³SiO_{3/2} steht,
wobei in den Formeln die Symbole Z¹, Z² und Z³ gleich oder verschieden sind und jeweils für Folgendes stehen:
- einen linearen oder verzweigten Alkylrest mit 1 bis 8 Kohlenstoffatomen, wobei der Alkylrest vorzugsweise aus der Gruppe bestehend aus einem Methyl, einem Ethyl, einem Propyl oder einem Octyl ausgewählt ist und es sich bei dem Rest noch weiter bevorzugt um ein Methyl handelt,
- einen Cycloalkylrest mit 5 bis 8 Kohlenstoffatomen, der gegebenenfalls durch mindestens ein Halogen substituiert ist,
- einen Arylrest mit 6 bis 12 Kohlenstoffatomen, der gegebenenfalls durch mindestens ein Halogen substituiert ist, vorzugsweise ein Phenyl oder ein Dichlorphenyl,
- einen Rest mit einem Alkylteil mit 5 bis 14 Kohlenstoffatomen und einem Arylteil mit 6 bis 12 Kohlenstoffatomen, der gegebenenfalls durch mindestens ein Halogen, einen Alkylrest mit 1 bis 6 Kohlenstoffatomen und/oder eine Alkoxyrest mit 1 bis 3 Kohlenstoffatomen substituiert ist,
- einen Hydroxylrest,
- ein Wasserstoffatom oder
- einen Alkenylrest mit 2 bis 6 Kohlenstoffatomen; und
mit der Maßgabe, dass für mindestens eine Einheit D oder T mindestens ein Symbol Z² oder Z³ für einen Hydroxylrest steht, und
ii. mindestens eine organische Verbindung **O** mit mindestens einer Epoxidgruppe **E,**
wobei das Verfahren die folgenden Schritte a) bis g) umfasst:
a) es wird eine Mischung **A** aus:
∘ 60 bis 71 Gew.-% eines Chlorsilans der Formel R¹SiCl₃,
∘ 15 bis 25 Gew.-% eines Chlorsilans der Formel (R²)₂SiCl₂,
∘ 7,5 bis 20 Gew.-% eines Chlorsilans der Formel (R³)₃SiCl und
∘ gegebenenfalls einem aromatischen Kohlenwasserstoff **AH**
hergestellt, wobei in den Formeln die Symbole R¹, R² und R³ gleich oder verschieden sind und jeweils für Folgendes stehen:
▪ einen linearen oder verzweigten Alkylrest mit 1 bis 8 Kohlenstoffatomen, wobei der Alkylrest vorzugsweise aus der Gruppe bestehend aus einem Methyl, einem Ethyl, einem Propyl oder einem Octyl ausgewählt ist und es sich bei dem Rest noch weiter bevorzugt um ein Methyl handelt,
▪ einen Cycloalkylrest mit 5 bis 8 Ringkohlenstoffatomen, der gegebenenfalls durch mindestens ein Halogen substituiert ist,
▪ einen Arylrest mit 6 bis 12 Kohlenstoffatomen, der gegebenenfalls durch mindestens ein Halogen substituiert sein kann, vorzugsweise Phenyl oder Dichlorphenyl,
▪ einen Rest mit einem Alkylteil mit 5 bis 14 Kohlenstoffatomen und einem Arylteil mit 6 bis 12 Kohlenstoffatomen, der gegebenenfalls durch mindestens ein Halogen, einen Alkylrest mit 1 bis 6 Kohlenstoffatomen und/oder einen Alkoxyrest mit 1 bis 3 Kohlenstoffatomen substituiert ist,
▪ ein Wasserstoffatom und
▪ einen Alkenylrest mit 2 bis 6 Kohlenstoffatomen;
b) die Mischung **A** wird unter Rühren und unter Einhaltung einer Temperatur zwischen 5 und 60 °C zu einer aus einer wässrigen Phase und einer Lösungsmittelphase bestehenden zweiphasigen Mischung **B,** hergestellt aus Wasser, einem aromatischen Kohlenstoff **AH** und gegebenenfalls einer wässrigen Lösung von Salzsäure **CA** gegeben, um die Chlorsilane der Mischung **A** zu hydrolysieren,
c) gegebenenfalls wird mindestens 1 Stunde, vorzugsweise 1 bis 8 Stunden, bei einer Temperatur zwischen 30 und 60 °C gerührt, um eine Kondensationsreaktion nach der Hydrolyse zu ermöglichen,
d) das Rühren wird gestoppt, um eine wässrige Phase und eine Lösungsmittelphase zu trennen,
e) die Lösungsmittelphase wird isoliert und mit Wasser gewaschen, vorzugsweise bis der pH-Wert der Waschwässer neutral ist,
f) das Silikonharz **R** wird aus der Lösungsmittelphase isoliert, vorzugsweise durch Entfernung flüchtiger Bestandteile, und
g) mindestens eine organische Verbindung **O** mit mindestens einer Epoxidgruppe **E** wird unter Rühren zu dem in Schritt f) erhaltenen Silikonharz **R** gegeben, wodurch die Mischung **X** erhalten werden kann.

2. Verfahren nach Anspruch 1, bei dem in Schritt a) die Mischung **A** aus:
∘ 60 bis 71 Gew.-% eines Chlorsilans der Formel R¹SiCl₃,
∘ 19 bis 25 Gew.-% eines Chlorsilans der Formel (R²)₂SiCl₂,
∘ 7,5 bis 16,5 Gew.-% eines Chlorsilans der Formel (R³)₃SiCl und
∘ gegebenenfalls einem aromatischen Kohlenwasserstoff **AH**
hergestellt wird, wobei in den Formeln die Symbole R¹, R² und R³ gleich oder verschieden sind und jeweils für Folgendes stehen:
▪ einen linearen oder verzweigten Alkylrest mit 1 bis 8 Kohlenstoffatomen, wobei der Alkylrest vorzugsweise aus der Gruppe bestehend aus einem Methyl, einem Ethyl, einem Propyl oder einem Octyl ausgewählt ist und es sich bei dem Rest noch weiter bevorzugt um ein Methyl handelt,
▪ einen Cycloalkylrest mit 5 bis 8 Kohlenstoffatomen, der gegebenenfalls durch mindestens ein Halogen substituiert ist,
▪ einen Arylrest mit 6 bis 12 Kohlenstoffatomen, der gegebenenfalls durch mindestens ein Halogen substituiert ist, vorzugsweise ein Phenyl oder ein Dichlorphenyl,
▪ einen Rest mit einem Alkylteil mit 5 bis 14 Kohlenstoffatomen und einem Arylteil mit 6 bis 12 Kohlenstoffatomen, der gegebenenfalls durch mindestens ein Halogen, einen Alkylrest mit 1 bis 6 Kohlenstoffatomen und/oder einen Alkoxyrest mit 1 bis 3 Kohlenstoffatomen substituiert ist,
▪ ein Wasserstoffatom und
▪ einen Alkenylrest mit 2 bis 6 Kohlenstoffatomen.

3. Verfahren nach Anspruch 1 oder 2, bei dem in Schritt g) die organische Verbindung **O** mit mindestens einer Epoxidgruppe **E** so zugegeben wird, dass ihr Gewichtsanteil zwischen 0,1 % und 1 %, bezogen auf das Gewicht des Silikonharzes **R,** und vorzugsweise zwischen 0,1 % und 0,75 %, bezogen auf das Gewicht des Silikonharzes **R,** liegt.

4. Verfahren nach einem der vorhergehenden Ansprüche, bei dem es sich in Schritt g) bei der organischen Verbindung **O** mit mindestens einer Epoxidgruppe **E** um einen Ester epoxidierter Fettsäuren handelt.

5. Verfahren nach einem der vorhergehenden Ansprüche, bei dem es sich in Schritt g) bei der organischen Verbindung **O** mit mindestens einer Epoxidgruppe **E** um den 2-Ethylhexylester von epoxidierten Sojafettsäuren handelt.

6. Verfahren nach Anspruch 1 oder 2, bei dem in Schritt b) die zweiphasige Mischung **B** aus Wasser, einer wässrigen Lösung von Salzsäure **CA** und einem aromatischen Kohlenwasserstoff **AH** besteht und die Salzsäurekonzentration weniger als 25 Gew.-%, bezogen auf die wässrige Phase der zweiphasigen Mischung **B,** beträgt.

7. Verfahren nach Anspruch 1 oder 2, bei dem in Schritt b) nach der Zugabe der Mischung **A** zu einer zweiphasigen Mischung **B** die Konzentration an aromatischem Kohlenwasserstoff **AH** zwischen 40 und 70 Gew.-%, bezogen auf das Gesamtgewicht der verwendeten Chlorsilane und des aromatischen Kohlenwasserstoffs **AH,** vorzugsweise zwischen 49 und 61 Gew.-%, bezogen auf das Gesamtgewicht der verwendeten Chlorsilane und des aromatischen Kohlenwasserstoffs **AH,** liegt.

8. Verfahren nach einem der Ansprüche 1, 2, 6 und 7, bei dem der aromatische Kohlenwasserstoff **AH** aus der Gruppe bestehend aus Toluol, Xylol und einer Mischung davon ausgewählt wird.

9. Mischung **X,** die lagerstabil ist, d. h. deren gemäß der ASTM-Norm D445-94 gemessene kinematische Viskosität bei Lagerung über einen Zeitraum von mindestens 6 Monaten nicht um mehr als 10 % relativ zunimmt, die durch das in einem der Ansprüche 1 bis 8 beschriebene Verfahren erhältlich ist, bestehend aus einem Silikonharz **R** gemäß Anspruch 1 und einer organischen Verbindung **O** mit mindestens einer Epoxidgruppe **E** gemäß einem der Ansprüche 1 bis 5.

10. Wässrige Silikondispersion **Y,** umfassend:
• mindestens eine Mischung **X** gemäß Anspruch 9,
• mindestens ein Tensid **S** und
• Wasser **W.**

11. Wässrige Silikondispersion **Y** nach Anspruch 10, **dadurch gekennzeichnet, dass** sie in Form einer Ölin-Wasser-Emulsion vorliegt.

12. Wässrige Formulierung **F,** die insbesondere bei der Formulierung von Anstrichmitteln verwendet werden kann, umfassend:
- eine wässrige Silikondispersion **Y** gemäß Anspruch 10 oder 11, wobei die Silikondispersion vorzugsweise in einer Menge von bis zu 150 Gew.-%, bezogen auf das Gesamtgewicht einer oder mehrerer organischer Dispersionen, und noch weiter bevorzugt zwischen 40 und 100 Gew.-% vorliegt;
- einen siliciumhaltigen oder nicht siliciumhaltigen Füllstoff, vorzugsweise ausgewählt aus der Gruppe bestehend aus gefälltem Siliciumdioxid, pyrogenem Siliciumdioxid, kolloidalem Siliciumdioxid oder pulverförmigem Siliciumdioxid, Carbonaten, Talk, TiO₂ und Mischungen davon;
- eine oder mehrere organische Dispersionen, vorzugsweise ausgewählt aus denjenigen, die (Co)polymere von Styrol und/oder (Meth)acrylsäure umfassen; und
mindestens eine der Verbindungen, die aus der Gruppe bestehend aus:
- einem Verdicker aus der Gruppe bestehend aus Acrylcellulose-Verdickern, Polyurethanen, Naturgummen und Mischungen davon;
- einem Koaleszenzmittel, vorzugsweise ausgewählt aus organischen Lösungsmitteln und noch weiter bevorzugt aus Glykolen und/oder aliphatischen Erdölschnitten;
- einem Netz- oder Dispergiermittel, vorzugsweise ausgewählt aus Phosphaten und/oder Polyacrylverbindungen;
- einem Tensid;
- einem Neutralisationsmittel;
- einem Biozid;
- einem Verdünnungsmittel;
- einem Weichmacher, vorzugsweise ausgewählt aus unreaktiven Silikonölen;
- einem Antischaummittel und
- einem Pigment oder Farbmittel (organisch oder anorganisch)
ausgewählt ist.

13. Anstrichmittel **P,** umfassend die wässrige Silikondispersion **Y** gemäß Anspruch 10 oder 11 oder die wässrige Formulierung **F** gemäß Anspruch 12.

14. Verwendung der wässrigen Silikondispersion **Y** gemäß Anspruch 10 oder 11 oder der wässrigen Formulierung **F** gemäß Anspruch 12 auf dem Gebiet der Anstrichmittel.

15. Verwendung einer nichtwässrigen Hydrophobierungszusammensetzung, bei der es sich um eine flüssige Silikonzusammensetzung **L,** die mindestens eine Mischung **X** gemäß Anspruch 9 umfasst, handelt, zum Imprägnieren eines porösen Baumaterials.

16. Verfahren zur Hydrophobierung von porösen Baumaterialien, bei dem man die nichtwässrige flüssige Silikonzusammensetzung **L** gemäß Anspruch 15 auf das Material aufbringt.

17. Verfahren nach Anspruch 16, bei dem das poröse Baumaterial aus den folgenden Substraten ausgewählt ist: Stein, Beton, Mörtel, Ziegelstein, Dachziegel und Holz.

## Claims

1. Process for preparing a storage-stable mixture **X,** namely a mixture whose kinematic viscosity measured according to standard ASTM D445-94 does not increase on storage by more than 10% relative over a period of at least 6 months, comprising:
i. a silicone resin **R** constituted of siloxyl units M, D and T with:
• M being a siloxyl unit of formula: (Z¹)₃SiO_{1/2},
• D being a siloxyl unit of formula: (Z²)₂SiO_{2/2}, and
• T being a siloxyl unit of formula: Z³SiO_{3/2} formulae in which the symbols Z¹, Z² and Z³, which may be identical or different, each represent:
- a linear or branched alkyl radical containing from 1 to 8 carbon atoms, and preferably the alkyl radical is chosen from the group constituted by a methyl, an ethyl, a propyl or an octyl, and even more preferentially the radical is a methyl,
- a cycloalkyl radical containing from 5 to 8 carbon atoms, optionally substituted with at least one halogen,
- an aryl radical containing from 6 to 12 carbon atoms optionally substituted with at least one halogen, preferably a phenyl or a dichlorophenyl,
- a radical with an alkyl part containing from 5 to 14 carbon atoms and an aryl part containing from 6 to 12 carbon atoms optionally substituted with at least one halogen, an alkyl radical containing from 1 to 6 carbon atoms and/or an alkoxyl radical containing from 1 to 3 carbon atoms,
- a hydroxyl radical,
- a hydrogen atom, or
- an alkenyl radical containing from 2 to 6 carbon atoms; and
with the condition that, for at least one unit D or T, at least one symbol Z² or Z³ is a hydroxyl radical, and
ii. at least one organic compound **O** containing at least one epoxy group **E,**
said process comprising the following steps a) to g):
a) a mixture **A** is prepared from:
∘ 60 to 71% by weight of a chlorosilane of formula R¹SiCl₃,
∘ 15 to 25% by weight of a chlorosilane of formula (R²) ₂SiCl₂,
∘ 7.5 to 20% by weight of a chlorosilane of formula (R³)₃SiCl, and
∘ optionally an aromatic hydrocarbon **AH,**
in which formulae the symbols R¹, R² and R³, which may be identical or different, each represent:
• a linear or branched alkyl radical containing from 1 to 8 carbon atoms, and preferably the alkyl radical is chosen from the group constituted by a methyl, an ethyl, a propyl or an octyl, and even more preferentially the radical is a methyl,
• a cycloalkyl radical containing from 5 to 8 ring carbon atoms, optionally substituted with at least one halogen,
• an aryl radical containing from 6 to 12 carbon atoms which may be optionally substituted with at least one halogen, preferably phenyl or dichlorophenyl,
• a radical with an alkyl part containing from 5 to 14 carbon atoms and an aryl part containing from 6 to 12 carbon atoms optionally substituted with at least one halogen, an alkyl containing from 1 to 6 carbon atoms and/or an alkoxyl containing from 1 to 3 carbon atoms,
• a hydrogen atom, and
• an alkenyl radical containing from 2 to 6 carbon atoms;
b) the mixture **A** is added, with stirring and while maintaining a temperature of between 5 and 60°C, to a two-phase mixture **B** constituted of an aqueous phase and a solvent phase prepared from water, an aromatic hydrocarbon **AH** and optionally an aqueous solution of hydrochloric acid **CA,** so as to perform hydrolysis of the chlorosilanes of the mixture **A,**
c) optionally, the stirring is maintained for at least 1 hour, preferably from 1 to 8 hours, at a temperature of between 30 and 60°C allowing a post-hydrolysis condensation reaction,
d) the stirring is stopped so as to separate an aqueous phase and a solvent phase,
e) the solvent phase is isolated and washed with water, preferably until the pH of the washing waters is neutral,
f) the silicone resin **R** is isolated from the solvent phase, preferably by devolatilization, and
g) at least one organic compound **O** containing at least one epoxy group **E** is added with stirring to said silicone resin **R** obtained in step f), allowing said mixture **X** to be obtained.

2. Process according to Claim 1, in which, in step a), the mixture **A** is prepared using:
∘ 60 to 71% by weight of a chlorosilane of formula R¹SiCl₃,
∘ 19 to 25% by weight of a chlorosilane of formula (R²)₂SiCl₂,
∘ 7.5 to 16.5% by weight of a chlorosilane of formula (R³)₃SiCl, and
∘ optionally an aromatic hydrocarbon **AH,**
in which formulae the symbols R¹, R² and R³, which may be identical or different, each represent:
• a linear or branched alkyl radical containing from 1 to 8 carbon atoms, and preferably the alkyl radical is chosen from the group constituted by a methyl, an ethyl, a propyl or an octyl, and even more preferentially the radical is a methyl,
• a cycloalkyl radical containing from 5 to 8 ring carbon atoms, optionally substituted with at least one halogen,
• an aryl radical containing from 6 to 12 carbon atoms which may be optionally substituted with at least one halogen, preferably phenyl or dichlorophenyl,
• a radical with an alkyl part containing from 5 to 14 carbon atoms and an aryl part containing from 6 to 12 carbon atoms optionally substituted with at least one halogen, an alkyl containing from 1 to 6 carbon atoms and/or an alkoxyl containing from 1 to 3 carbon atoms,
• a hydrogen atom, and
• an alkenyl radical containing from 2 to 6 carbon atoms.

3. Process according to Claim 1 or 2, in which, in step g), the organic compound **O** containing at least one epoxy group **E** is added so that its weight content is between 0.1% and 1% relative to the weight of said silicone resin **R** and preferably between 0.1% and 0.75% relative to the weight of said silicone resin **R.**

4. Process according to any one of the preceding claims, in which, in step g), the organic compound **O** containing at least one epoxy group **E** is an epoxidized fatty acid ester.

5. Process according to any one of the preceding claims, in which, in step g), the organic compound **O** containing at least one epoxy group **E** is the 2-ethylhexyl ester of epoxidized soybean fatty acids.

6. Process according to Claim 1 or 2, in which, in step b), the two-phase mixture **B** is constituted of water, of an aqueous hydrochloric acid solution **CA** and of an aromatic hydrocarbon **AH,** and the hydrochloric acid concentration is less than 25% by weight relative to the aqueous phase of the two-phase mixture **B.**

7. Process according to Claim 1 or 2, in which, in step b), after the mixture **A** has been added to a two-phase mixture **B,** the concentration of aromatic hydrocarbon **AH** is between 40 and 70% by weight relative to the total weight of the chlorosilanes used and of the aromatic hydrocarbon **AH,** preferably between 49 and 61% by weight relative to the total weight of chlorosilanes used and of aromatic hydrocarbon **AH.**

8. Process according to any one of Claims 1, 2, 6 and 7, in which the aromatic hydrocarbon **AH** is chosen from the group constituted by: toluene, xylene and a mixture thereof.

9. Storage-stable mixture **X,** namely a mixture whose kinematic viscosity measured according to standard ASTM D445-94 does not increase on storage by more than 10% relative over a period of at least 6 months, which may be obtained by the process as described in any one of Claims 1 to 8, constituted of a silicone resin **R** as described in Claim 1 and an organic compound **O** containing at least one epoxy group **E** as described in any one of Claims 1 to 5.

10. Aqueous silicone dispersion **Y** comprising:
• at least one mixture **X** as described in Claim 9,
• at least one surfactant **S,** and
• water **W.**

11. Aqueous silicone dispersion **Y** according to Claim 10, **characterized in that** it is in the form of an oil-in-water emulsion.

12. Aqueous formulation **F,** which may be used especially in the formulation of paints, comprising:
- an aqueous silicone dispersion **Y** as described in claim 10 or 11, said silicone dispersion preferably being present at up to 150% by weight relative to the total weight of one or more organic dispersions and even more preferentially between 40 and 100% by weight;
- a siliceous or nonsiliceous filler, preferably chosen from the group constituted by: precipitated silica, fumed silica, colloidal silica or silica powder, carbonates, talc, TiO₂, and mixtures thereof;
- one or more organic dispersions, preferably chosen from those comprising (co)polymers of styrene and/or (meth)acrylic acid; and
at least one of the compounds chosen from the group constituted by:
- a thickener chosen from the group constituted by acrylic cellulose-based thickeners, polyurethanes, natural gums, and mixtures thereof;
- a coalescer preferably chosen from organic solvents and even more preferentially from glycols and/or aliphatic petroleum fractions;
- a wetting agent or dispersant preferably chosen from phosphates and/or polyacrylics;
- a surfactant;
- a neutralizing agent;
- a biocide;
- a diluent;
- a plasticizer, preferably chosen from nonreactive silicone oils;
- an antifoam; and
- a pigment or colorant (organic or mineral).

13. Paint **P** comprising the aqueous silicone dispersion **Y** as described in Claim 10 or 11 or the aqueous formulation **F** as described in Claim 12.

14. Use of the aqueous silicone dispersion **Y** as described in Claim 10 or 11 or of the aqueous formulation **F** as described in Claim 12 in the field of paints.

15. Use for impregnating a porous construction material with a nonaqueous waterproofing composition which is a liquid silicone composition **L** comprising at least one mixture **X** as described in Claim 9.

16. Process for waterproofing porous construction materials, in which the nonaqueous liquid silicone composition **L** as described in Claim 15 is applied to said material.

17. Process according to Claim 16, in which said porous construction material is chosen from the following substrates: stone, concrete, mortar, brick, tile and wood.
